(19) Europäisches Patentamt
European Patent Office
Office européen des brevets

(11) **EP 4 357 843 B1**

(12) **EUROPEAN PATENT SPECIFICATION**

(45) Date of publication and mention
of the grant of the patent:
**29.04.2026  Bulletin 2026/18**

(51) International Patent Classification (IPC):
**G02F 1/315** (2006.01)        **G02F 1/31** (2006.01)
**G02F 1/01** (2006.01)

(21) Application number: **22383012.6**

(52) Cooperative Patent Classification (CPC):
**G02F 1/0147; G02F 1/31; G02F 1/315**

(22) Date of filing: **20.10.2022**

(54) **OPTICAL SWITCHING DEVICE**

OPTISCHE SCHALTVORRICHTUNG

DISPOSITIF DE COMMUTATION OPTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**24.04.2024  Bulletin 2024/17**

(73) Proprietor: **Universidad de Cantabria**
**39005 Santander, Cantabria (ES)**

(72) Inventors:
  • **SANTOS PERODIA, Gonzalo**
    **39005 Santander (ES)**
  • **GUTIÉRREZ VELA, Yael**
    **70126 Bari (IT)**
  • **LOSURDO, Maria**
    **35127 Padova (IT)**
  • **MORENO GRACIA, Fernando**
    **39005 Santander (ES)**

(74) Representative: **Balder IP Law, S.L.**
**Paseo de la Castellana 93**
**5ª planta**
**28046 Madrid (ES)**

(56) References cited:
JP-A- 2012 244 328      JP-A- H09 258 273
US-A1- 2004 184 506     US-A1- 2008 285 912
US-A1- 2012 170 359     US-A1- 2020 379 276
US-A1- 2021 231 836

• KAMAL RAJU MD MOZAMMAL ET AL:
"Changing of Dielectric Properties Through
Light-Matter Interaction Assisted by External
Voltage", 2018 10TH INTERNATIONAL
CONFERENCE ON ELECTRICAL AND
COMPUTER ENGINEERING (ICECE), IEEE, 20
December 2018 (2018-12-20), pages 329 - 332,
XP033514911, [retrieved on 20190206], DOI:
10.1109/ICECE.2018.8636735
• MUSTAFA KAYKISIZ ET AL: "Low-loss optical
switch using Brewster angle", OPTICAL MEMS
AND NANOPHOTONICS (OMN), 2011
INTERNATIONAL CONFERENCE ON, IEEE, 8
August 2011 (2011-08-08), pages 215 - 216,
XP031968755, ISBN: 978-1-4577-0334-8, DOI:
10.1109/OMEMS.2011.6031086

## Description

### TECHNICAL FIELD

The present invention relates to optical switches. More specifically, it relates to optical switches applicable to, among other fields, optical communications and/or computing.

### STATE OF THE ART

At present, the transition from electronic to optical circuits is one of the technological challenges in which material physicists and optical engineers focus their current research. The goal is to get faster and lower consumption systems for applications ranging from health to digital processing and digital communications. If this is achieved, it is highly likely that optical circuits will replace the current widely used electronic logic devices in a near future. As an example, digital photonic logic circuits are key elements in the next generation of optical computers and memory devices. In combination with traditional semiconductor processes and integrated circuit technologies, the design and manufacture of large-scale photonic integrated switches for building optical gates is an essential aspect in the development towards all-optical processing.

In order to develop optical switches, different techniques have been examined. For example, US2011/0075239A1 discloses an apparatus, system and method for all-optical switching based on the principle of Electromagnetically-Induced Transparency (EIT) in an interface region between two light transmitting media. EIT is caused by Lambda atoms disposed in the interface region in response to an incident photon.

For the development of optical switches, key in the race towards all optical processing, phase change materials (PCM) are showing outstanding qualities. A peculiarity of these materials is that their optical properties, such as refractive index, can be controlled by an external stimulus, such as optical, electrical, thermal, or any other stimulus. This attractive behavior, shown for example by a handful of chalcogenide alloys, exemplified by the Ge-Sb-Te (GST) family, has been exploited in a wide range of photonic devices including optical switches. For example, US2020/0379276A1 discloses a chalcogenide phase change material all-optical switch based on a photonic crystal and a manufacturing method therefor. However, the manufacturing process of this all-optical switch is complex, which makes the product expensive. What is more, the optical switch must work in transmission, which makes its practical implementation in an optical-electrical circuit difficult. Besides, the proposed all-optical switch performs satisfactorily only at specific wavelengths in the band of 1500 to 1600 nm. US20080285912A1 discloses an optical circuit implementing a phase shifter having two optical switches for providing a phase shift in one signal relative to another signal.

These and other shortcomings tend to impair the effectiveness of current optical switches based on phase change materials. Therefore, there is a need for new optical devices that overcome the disadvantages of conventional ones.

### DESCRIPTION OF THE INVENTION

The present invention aims at overcoming the drawbacks of the prior art. The present invention provides an all-optical switch simple in structure, which performs in a very broad range of wavelengths and easy to integrate with other optical logic elements, electronic equipment and semiconductors (such as Si, CMOS, MEM platforms, among others).

The proposed optical switching device is based on physical phenomena occurring at an interface region between two light transmitting media. The first light transmitting media is any material transparent at the wavelength of interest. The second light transmitting media is a material (active element) which can change its optical state upon application of an external stimulus, such as a phase-change material or a material which, by changing its stoichiometry, its optical properties change, such as molybdenum oxide. The wavelength range of interest includes the visible and the infrared spectrum of light. The wavelength range of interest is a range between 0.4 and 5 $\mu$m (micrometers, 1 $\mu$m = $10^{-6}$ m), such as between 0.4 and 2 $\mu$m, or between 0.8 and 1.6 $\mu$m, or between 1.0 and 1.6 $\mu$m. Examples of transparent materials are glass, such as silicon dioxide (silica, $SiO_2$) or borosilicate glass, silicon nitride ($Si_3N_4$), sapphire, ITO (Indium Tin Oxide) and quartz.

Phase-change materials as well as materials which, by changing its stoichiometry, its optical properties change, can undergo a reversible state or phase change when they are submitted to the effect of an external stimulus. The external stimulus can be optical, electrical, thermal, or other. Due to the effect of this stimulus, the state of the material changes from crystalline state to amorphous state or vice versa. Certain phase-change materials are ideal materials to build an optical switch because the optical properties (in particular, refractive index) of the two different states they may show (crystalline state and amorphous state) are very different between the two mentioned states. In other words, suitable phase change materials are those in which, at a waveband of interest, the refractive index of the material when it is in crystalline state is very different from the refractive index of the material when it is in the amorphous state. This is also applicable to materials whose optical properties can change when the stoichiometry of the material changes, as is the case of molybdenum oxide.

Thus, by controlling the external stimulus, the refractive index of the phase change material is also controlled, which implies that the amount of reflected light is subsequently controlled. The external stimulus can be the light radiated by an external laser, or an electrical field, or an applied voltage, or the temperature applied by a heating means. This means that the state of the second light transmitting media (such as phase change material) can be manipulated by an external stimulus. Another condition the selected second light transmitting media must fulfil is that it is stable in physical and chemical properties at room temperature. The optical switching device is therefore non-volatile, meaning that, in the absence of the external stimulus (for example, laser), its switch mode (either ON or OFF) does not change at room temperature.

The proposed optical switching device performs with very high contrast at a large wavelength band, because, in addition to the use of suitable second radiation transmitting media (such as phase-change materials or materials whose optical properties change when the stoichiometry of the material changes), the inventors have surprisingly noticed that under certain physical phenomena derived from a reflection effect, in particular the Brewster condition occurring at the interface region between two radiation transmitting media (one of which is the mentioned second radiation transmitting media), total absence of reflected radiation (which represents one of the two modes of the optical switch, for example, the OFF mode) can be obtained depending on the state of the second transmitting media. Therefore, high contrast between the ON and OFF modes of the optical switch is achieved.

Non-limiting examples of suitable phase-change materials are chalcogenide phase-change materials. They have ultrafast phase-change characteristics, enabling switching response in the range of femtoseconds ($10^{-15}$ seconds). More particularly, the following chalcogenide phase-change materials can be used: GeTe, GaSe, SbTe, GeSe, GaTe, GaS, $Sb_2S_3$, $Sb_2Se_3$, $Ga_2S_3$ and GST and any derivatives thereof. One skilled in the art is aware of the fact that a chalcogenide PCM can be made ad-hoc, e.g. by changing the proportions of one or more elements to form a new PCM. Another suitable material is molybdenum oxide ($MoO_x$, wherein x=2 or 3), which is a material whose optical properties change when its stoichiometry changes. All these materials perform with very high contrast at the wavelength band of interest. For example, for a wavelength of 1550 nm, the refractive indices of $Sb_2S_3$ for the amorphous and crystalline states are n=2.71 and n=3.31 respectively. In the case of $Sb_2Se_3$, the refractive indices are n=3.28 and 4.08 for the crystalline and amorphous states respectively. The index contrast (also referred to as refractive index contrast) of $Sb_2S_3$ is 0.6 and the index contrast of $Sb_2Se_3$ is 0.8 approx., as reported for example by Delaney, M., Zeimpekis, I., Lawson, D., Hewak, D. W., & Muskens, O. L. (2020). A new family of ultralow loss reversible phase-change materials for photonic integrated circuits: Sb2S3 and Sb2Se3. Advanced functional materials, 30(36), 2002447.

In use of the optical switching device, when radiation (such as light, when radiation is in the visible spectrum of light) is incident with the Brewster angle at an interface region between the a first material (material transparent at the wavelength of interest) and a second light transmitting media (active material, such as phase-change material), the amount of reflected radiation depends on the state (amorphous or crystalline) of the second transmitting media. In fact, not only does the amount of reflected radiation depend on the state of the second transmitting media, such as phase-change material, but also that amount of reflected radiation is substantially zero for one of the two states of this material. Therefore, governing the optical properties of the active material and the angle with which radiation is refracted when it enters the optical switching device, the electromagnetic characteristics of the output radiation are controlled.

In a first aspect of the invention, an optical switching device is provided. The optical switching device comprises: a substrate; a layer of an active material disposed on the substrate, the active material being either a phase change material or a material which, by changing its stoichiometry, its optical properties change; wherein the active material is configured to change upon application of an external stimulus between a crystalline phase having a first refractive index and an amorphous phase having a second refractive index, the first refractive index being different from the second refractive index; and a layer of a transparent material disposed on the layer of active material, wherein the layer of a transparent material is a prism defining an angle $\alpha$; wherein the angle $\alpha$ defined by the prism is selected such that, in use of the optical switching device, when a linearly polarized plane radiation wave reaches an entrance face of the prism and radiation (such as light) is refracted and travels within the prism until it reaches the surface of the layer of active material, the Brewster condition is met for one of the two phases, crystalline phase or amorphous phase, of the active material of which the layer is made, so that when the active material is in the phase for which the Brewster condition is met, no radiation is reflected at the interface between the prism and the layer of active material, while when the active material is in the phase for which the Brewster condition is not met, radiation is reflected at the interface between the prism and the layer of active material and leaves the optical switching device when it reaches an output face of the prism, thus controlling the switching mode of the optical switching device through the presence or absence of reflected radiation at said interface.

In embodiments of the invention, the thickness of the layer of an active material is between 30 and 2000 nm.

In embodiments of the invention, the layer of active material is made of a phase change material, the phase change material being a chalcogenide phase-change material.

In embodiments of the invention, the chalcogenide phase-change material is selected from the following: GeTe, GaSe, SbTe, GeSe, GaTe, GaS, $Sb_2S_3$, $Sb_2Se_3$, $Ga_2S_3$ and GST.

In embodiments of the invention, the substrate is made of the same transparent material as the material of which the prism is made.

In embodiments of the invention, the linearly polarized plane wave travels in the air until it reaches an entrance face of the prism.

In embodiments of the invention, the linearly polarized plane wave travels through a waveguide until it reaches an entrance face of the prism.

In embodiments of the invention, when the active material is in the phase for which the Brewster condition is not met, radiation leaves the optical switching device through the air when it reaches an output face of the prism.

In embodiments of the invention, when the active material is in the phase for which the Brewster condition is not met, radiation leaves the optical switching device through a waveguide when it reaches an output face of the prism.

In embodiments of the invention, the optical switching device operates in the infrared and/or the visible spectrum of light.

In a second aspect of the invention, a system is provided. The system comprises: an optical switching device according to the first aspect of the invention; and means for generating a stimulus configured to control the state or phase of the active material of optical switching device.

In embodiments of the invention, the system further comprises: a first waveguide configured to carry the linearly polarized plane wave until it reaches an entrance face of the prism; and a second waveguide configured to carry the output radiation when it reaches an output face of the prism.

In embodiments of the invention, the system further comprises a first air gap between the end of the first waveguide and a second air gap between the end of the second waveguide.

In embodiments of the invention, the system further comprises means for collimating the radiation outputted by the first waveguide, so that a collimated radiation beam reaches the entrance face of the prism.

In a third aspect of the invention, a method of operating an optical switching device between an ON mode and an OFF mode, is provided. The optical switching device comprises a substrate, a layer of an active material disposed on the substrate, wherein the active material is configured to change upon application of an external stimulus between a crystalline phase having a first refractive index and an amorphous phase having a second refractive index, the first refractive index being different from the second refractive index; and a layer of a transparent material disposed on the layer of active material, wherein the layer of a transparent material is a prism defining an angle $\alpha$. The method comprises: controlling, using a stimulus source, the state or phase of the active material between a crystalline phase having a first refractive index and an amorphous phase having a second refractive index, the first refractive index being different from the second refractive index; providing a linearly polarized plane wave to incide on an entrance face of the prism, so that radiation is refracted and travels within the prism until it reaches the surface of the layer of active material; and when the phase change material is in a phase, crystalline or amorphous, for which the Brewster condition is met, no radiation is reflected at the interface between the prism and the layer of active material, and the optical switching device is in OFF mode, while when the active material is in a phase, amorphous or crystalline, for which the Brewster condition is not met, radiation is reflected at the interface between the prism and the layer of active material and leaves the optical switching device when it reaches an output face of the prism, and the optical switching device is in ON mode.

While conventional PCM-based optical switching devices have a limited operation range (typically in specific wavelengths within the wavelength range of 1500 to 1600 nm), the optical switch of the present invention, operating under reflection properties of light (radiation), performs optimally in much larger wavelength ranges, including the visible and the infrared wavelength range, because with a large collection of phase change materials, among other active materials, the reflectivity response (Brewster phenomena) of the device performs with optimal contrast (ON/OFF switching) in a large wavelength range (in the visible and the infrared spectrum of light).

High efficiency is obtained when both phases of the active material, such as phase-change material, are completely transparent to incident radiation. This implies that there is no light absorption, that is to say, that the refraction index of the active material in both phases or states does not have imaginary part (the Brewster phenomenon is thus pure). The highest efficiency is obtained when the material of the prism (transparent material) and the material of the substrate is the same, more precisely when both materials are the same transparent material. This substantially reduces noise (spurious radiation) travelling within the device.

Another advantage of operating under reflection properties of light is that this operation enables the optical integration of the device with other optical and electrical equipment (electrophotonic circuit), because the set-up to operate under reflection conditions implies that light travels in a plane parallel to the substrate, which does not happen in the device of US2020/0379276A1. Therefore, the proposed optical set-up enables integration as it does not cause the volume of the substrate to increase. Therefore, large-scale manufacturing of devices including the optical switching device is enabled.

The optical switching device performs with high contrast, high rate and low loss. Therefore, the proposed optical switching device opens new possibilities for applications involving more efficient photonic digital circuits.

Additional advantages and features of the invention will become apparent from the detail description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figures 1A-1C schematically illustrate an optical switching device according to an embodiment of the present invention. Figure 1A shows a tridimensional side view of the optical switching device. Figure 1B shows a side view (2D) of the optical switching device. Figure 1C shows a cross-section viewed from the direction of arrival (wavefront) of a plane wave (front view from the wavefront).

Figure 2 shows the side view of Figure 1B, in which relevant geometrical parameters are included.

Figures 3A-3C schematically illustrate different views of an optical switching device according to another embodiment of the present invention. Figure 3A shows a side view (2D) of the optical switching device of this embodiment. Figure 3B shows a top view (2D) thereof. Figure 3C shows a cross-section viewed from the direction of arrival (wavefront) of a plane wave.

Figures 4A-4B schematically illustrate an optical switching device alternative to the one shown in Figures 3A-3C.

Figures 5-10 show the output reflectivity and contrast of different optical switching devices of examples according to the present invention.

Figure 11 shows a graphic with the refractive indices of $Sb_2S_3$ for the amorphous and crystalline states in the wavelength band of interest.

## DESCRIPTION OF A WAY OF CARRYING OUT THE INVENTION

The optical switching device of the present invention is based on the physical phenomenon of optical reflection. In particular, the device operates as an optical switch when the incident radiation beam fulfils the Brewster angle at an interface region between a first material and a second material or active material (such as a phase-change material); for example, between a layer of a first material and a layer of a second material. The incident radiation is a linearly polarized plane wave parallel to the plane of incidence (p-polarisation). The first material is a material transparent to the wavelength band of interest. For example, the first material is transparent in the wavelength range of interest, that is to say, in a wavelength range comprised between 0.4 $\mu$m and 5 $\mu$m, approximately. At the Brewster angle there is no reflection of the p polarization of the waveform. The state or phase of the active material, such as phase-change material, is manipulated by an external stimulus, such as a laser, an electrical field, an applied voltage or a heating means providing certain temperature, in such a way that the refractive index of the active material, and therefore the amount of radiation it can reflect, is different, depending on the state of the material (crystalline state and amorphous state in the case of a phase-change material). In other words, and referring specifically to phase change materials, depending on the phase of the PCM either amorphous or crystalline, the amount of reflected radiation is different. Therefore, under the control of an external stimulus (for example, with the use of laser with certain power level and wavelength or by applying a certain voltage), the active material can undergo a phase change. This implies that the optical properties of the active material (i.e. the PCM) are governed and the electromagnetic characteristics of the output radiation are thus controlled.

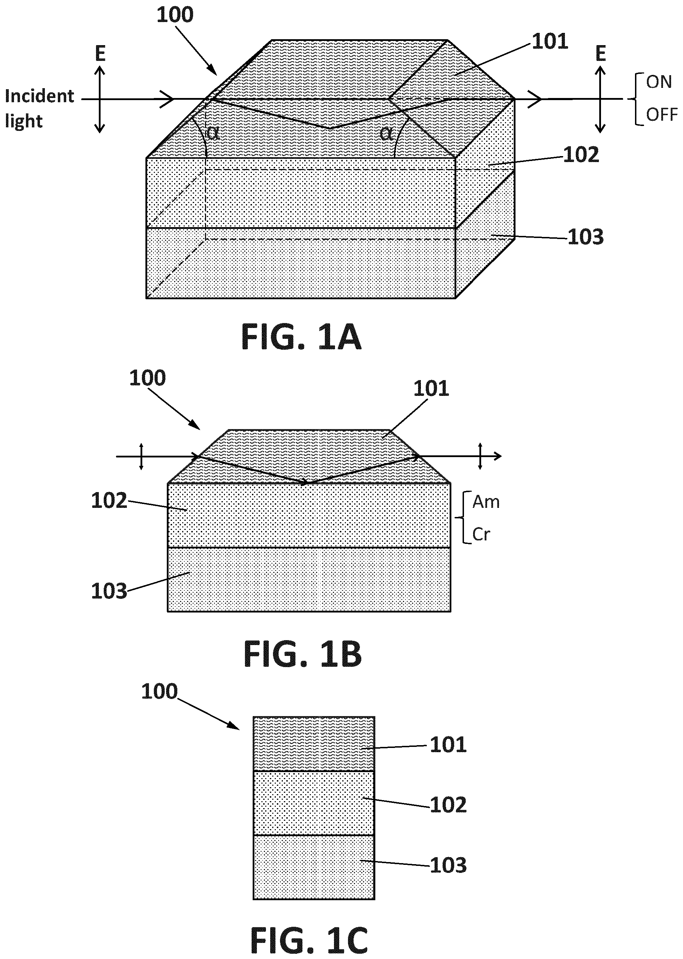

A basic configuration of the optical switching device 100 of the present invention is shown in Figures 1A-1C. In this configuration, the incident radiation (a linearly polarized plane wave parallel to the plane of incidence (p-polarisation)) travels in the air until it arrives at the device. Radiation with the p polarization has electric field polarized in the same plane as the incident ray and the surface normal at the point of incidence. In other words, the incident radiation forms a plane wavefront travelling in a direction parallel to the substrate. The incident radiation beam has a wavelength preferably within the infrared (IR) and/or visible spectrum, such as in the wavelength range between 0.4 and 5 $\mu$m, or between 0.4 and 2 $\mu$m, or between 0.8 and 1.6 $\mu$m, or between 1.0 and 1.6 $\mu$m.

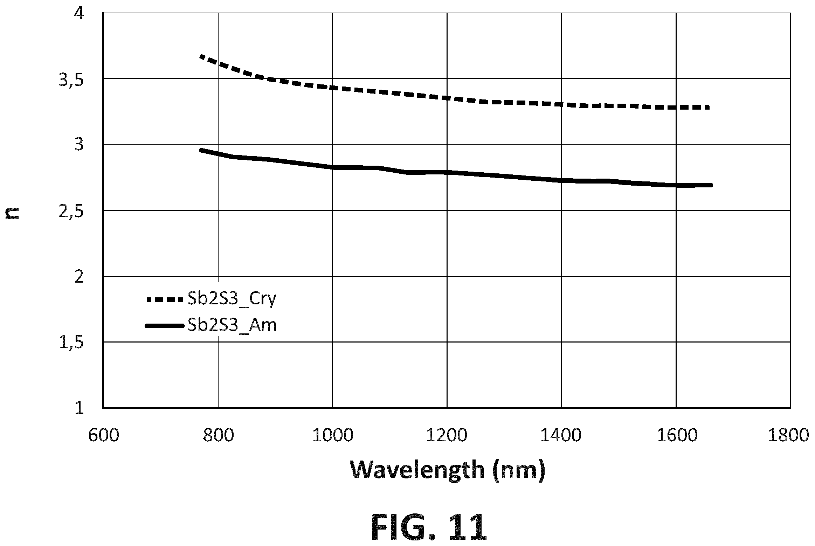

The optical switching device 10 includes the following elements, stacked one on another: A layer 102 of active material, which is a phase change material (PCM) or of a material which, by changing its stoichiometry, its optical properties change, is deposited on a substrate layer 103. The substrate layer 103 can be for example made of silicon (Si), silicon dioxide (silica, $SiO_2$) or aluminium oxide ($Al_2O_3$) , sapphire, silicon nitride ($Si_3N_4$) and ITO. The substrate layer 103 can be alternatively made of any other material conventionally used as a substrate. The thickness of the active material 102 is between 30 and 2000 nm (nanometers, $10^{-9}$ meters), preferably between 30 and 800 nm, or between 50 and 800 nm, more preferably between 50 and 500 nm. A certain minimum thickness, such as 30 nm, is required so that, when the state of the active material is such that some radiation travels within it (because the Brewster condition has not been met), noise due to the radiation travelling within the active material is prevented or at least minimized. Usually, the amount of such noise is reduced as the thickness of the active material is increased. Also, the smaller the thickness, the better for changing the state of the active material (such as the phase of the PCM). The inventors have observed that a thickness between 30 and 800 nm, such as between 50 and 500 nm, provides an optimal response. Layer 102 is the layer called active layer, because the behaviour of the material of which it is made determines the mode (ON/OFF) of the optical switch. The active material can be a phase change material. The phase change material of layer 102 can be one of the following chalcogenide phase-change materials: GeTe, GaSe, SbTe, GeSe, GaTe, GaS, $Sb_2S_3$, $Sb_2Se_3$, $Ga_2S_3$ and GST and any derivatives thereof. In a particular embodiment, the phase change material is $Sb_2S_3$. In another particular embodiment, the phase change material is $Sb_2Se_3$. The active material can also be a material whose optical properties can change when the stoichiometry of the material changes, such as molybdenum oxide. All these materials perform with very high contrast at the wavelength band of interest. For example, in the wavelength band of interest the refractive indices of $Sb_2S_3$ for the amorphous and crystalline states remain substantially constant and with high contrast, as shown in the graphic of Figure 11.

A layer 101 of silicon dioxide (also referred to as silica, $SiO_2$, colloquially called glass), or alternatively any other material transparent to the wavelength band of interest, such as silicon nitride ($Si_3N_4$), is deposited on the PCM layer 102. Layer 101 is the coupling medium for coupling the radiation travelling in the air to the device 100. Layer 101 is a prism, that is to say, a transparent (to the wavelength of interest) optical element with flat, polished surfaces that are designed to refract light. At least one surface must be angled. In the present case, both the entrance surface (for the incident radiation beam) to the prism and the output surface from the prism are angled and defined by angle $\alpha$. Following the geometry of the substrate 103, prism 101 has a rectangular base and four rectangular sides (two of which are angled). Prism 101 is also referred to as prism coupler. Prism 101 is carved in such a way that when the radiation beam hits the interface prism 101 - active layer 102, it is reflected in the active material under Brewster's condition for one of the two phases or states of the active material. This situation is imposed or solved by calculating the angle $\alpha$ of the prism that enables that the radiation beam travelling within layer 101 hits the interface prism-active material under Brewster's condition. The angle $\alpha$ of the prism is the angle shown in Figures 1A and 1B, i.e. the angle formed by the slope of the prism 101 with respect to its base. For this angle, only the component (of light or, in general, radiation) perpendicular to the plane of incidence is reflected at the interface prism / active material layer. So, if the incident radiation is parallel to this plane, the reflection for one of the phases is substantially zero. This angle can be determined considering the optical constants (refraction index) of the prism material and of the active material and the prism angle. The phases or states of the active material which works as "on/off" can be amorphous/crystalline or crystalline/amorphous, depending for example on the active material, such as PCM.

Linearly polarized radiation with its electric field contained in the incidence plane (determined by the incident direction and the normal to the entrance face of the prism coupler 101) travelling in the air is refracted by the entrance face of the prism coupler 101 (at the interface air - prism 101). The refracted radiation beam travels within the prism 101 until it hits the surface of the active material layer 102. The radiation beam is in turn reflected at the interface prism coupler 101 / active material 102. If the angle of incidence at the interface air - prism 101 fulfils the Brewster condition (i.e. the tangent of this angle is equal to the ratio between the active material refractive index (for one of its phases) and the prism refractive index), there is no reflected light. The angle of the prism coupler is calculated in such a way that the angle of incidence at the interface air - prism 101 fulfils the Brewster condition for one of the phases or states of the active material. At the Brewster angle there is no reflection of the p polarization of the wave. This condition is fulfilled, for example, for the crystalline phase. The fulfillment of the Brewster condition corresponds to the OFF mode of the switch. For the amorphous phase, there is no Brewster condition and, therefore, part of the incident radiation at the interface prism /active material is reflected. This corresponds to the ON mode of the switch. Alternatively, the Brewster condition can be fulfilled (imposed) for the amorphous phase, in which case it would correspond to the OFF mode of the switch.

In other words, the angle of incidence of light at the interface air-prism region is selected such that when the active material is in a first state, either the crystalline state or the amorphous state, radiation is reflected; and when the active material is in a second state, either the amorphous state or the crystalline state, different from the first state, no radiation is reflected. This angle of incidence depends on the refractive index of the prism and on the refractive index of the layer of active material.

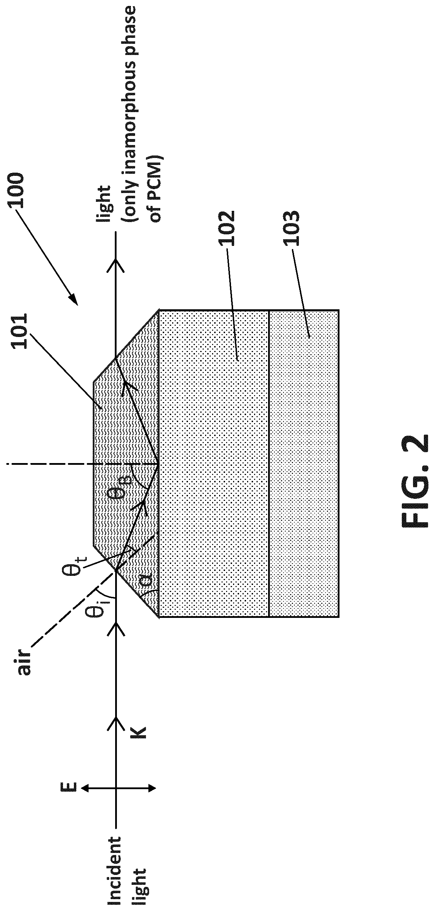

In order for the device 10 to behave as an optical switch, the presence and absence of light must be controlled, meaning that the presence of reflected radiation will mean that the optical switch is in ON mode and the absence of reflected radiation will mean that the optical switch is in OFF mode. To obtain the OFF mode, it is therefore necessary that there is no reflected radiation. Besides, one of the modes will be associated to one of the states of the active material (layer 102) and the other mode will be associated to the other state of the active material. For example, the ON mode of the switch will be associated to the crystalline state of the active material layer 102 and the OFF mode of the switch will be associated to the amorphous state of the active material layer 102. Alternatively, the ON mode could be associated to the amorphous state of the active material layer 102 and the OFF mode to the crystalline state thereof. This is geometrically explained referring to Figure 2.

Figure 2 shows the side view of the optical switching device already depicted in Figure 1B. The incident radiation is a plane wavefront travelling in a direction parallel to the substrate 103 (and active material layer 102). Radiation travelling in the air forms an angle of incidence $\Theta_i$ between the incident direction of radiation and the normal (dotted line perpendicular to the slope of the prism in Figure 2) to the entrance surface of the prism coupler 101. Radiation is then refracted at the interface air - prism 101). The radiation beam refracted with angle $\Theta_t$ (angle of wave transmitted within the prism 101) travels within the prism 101 until it hits the surface of the active material layer 102. At the surface of the active material layer 102, no reflected radiation occurs when the angle of incidence ($\Theta_B$ in Figure 2) fulfils the Brewster condition, that is to say, when the tangent of the angle of incidence is equal to the ratio between the refractive index of the active material layer 102 and the refractive index of the layer 101. This is because for the Brewster angle $\Theta_B$, only the radiation component which is perpendicular to the plane of incidence, is reflected at the interface between layers 101 and 102. Therefore, if the incident radiation is parallel to this plane, there is no reflected radiation.

The Brewster condition can be mathematically expressed as follows (wherein for simplicity, the active material is selected to be a phase change material PCM, although it could alternatively be a material which, by changing its stoichiometry, its optical properties change):

$$\theta_B = atan\left(\frac{n_{PCM}}{n_{prism}}\right)$$

wherein $n_{prism}$ is the refractive index of the material of the prism 101 and is $n_{PCM}$ is the refractive index of the PCM (layer 102). It is remarked that the PCM adopts two different refractive indexes depending on its phase or state: $n_{PCM-c}$, when the PCM is in the crystalline state and $n_{PCM-a}$ when the PCM is in the amorphous state.

Therefore, once selected the material for layer 101 (prism) (and therefore its refractive index $n_{prism}$) and the material of the PCM layer 102 (the phase change material presents a certain refractive index $n_{PCM-c}$ when it is in the crystalline state and a different refractive index $n_{PCM-a}$ when it is in the amorphous state, and these states can be controlled by an external stimulus, such as a laser), the Brewster angle $\Theta_B$ can be calculated for one of the two states (either crystalline or amorphous) and the angle $\alpha$ of the slope of prism 101 can be obtained, by applying the following geometrical relationships:

$$\theta_t = \theta_B - \alpha$$

$$\theta_i = 90 - \alpha$$

And applying the Snell's law:

$$n_{air} \cdot \sin\theta_i = n_{prism} \cdot \sin\theta_t$$

wherein $n_{air} = 1$,

the angle $\alpha$ which fulfils that the Brewster condition (with Brewster angle $\Theta_B$) is achieved when the PCM is, for example, in crystalline state, is obtained. Alternatively, it can be imposed that the Brewster condition is achieved when the PCM is in amorphous state.

In Figure 2, the Brewster condition is achieved when the active material (PCM) is in crystalline state, and radiation is reflected after hitting on the interface prism 101 / PCM layer 102 and then leaves the prism 101, only in the amorphous phase of the active material (PCM).

It is remarked that there can be a certain tolerance in the calculation of the Brewster angle $\Theta_B$ and therefore the prism angle $\alpha$. Depending on the selected active material (such as PCM), the maximum tolerance in the Brewster angle $\Theta_B$ can be of 5° (degrees), such as 4°, or 3°, or 2°.

The inventors have surprisingly observed that, when the stack of layers 101-102-103 is symmetric in terms of materials, that is to say, the material of which prism 101 is made is the same as the material of the substrate 103, the highest efficiency (dB) is obtained. Therefore, in preferred embodiments, the substrate 103 is made of the same transparent material as the prims 101. Examples of possible materials for the substrate 103 and prism 101 are sapphire, silicon nitride ($Si_3N_4$) and ITO (Indium Tin Oxide, which is a ternary composition of indium, tin and oxygen in varying proportions), among others. Because both the prism 101 and the substrate 103 are transparent and of the same material, the Brewster phenomenon (and Brewster angle) occurs at both interfaces: interface prism 101-active material 102 and interface active material 102-substrate 103; as a consequence of which the amount or radiation being reflected on the second interface active material 102 - substrate 103 is also substantially null, which in turn minimizes the noise (undesired radiation) in the device. As a matter of example, the inventors have observed that even when a layer of active material 102 of very small thickness is used, the efficiency is very high, in spite of the fact that reflected radiation travels along a short distance of layer of active material 102, because the undesired reflections of radiation are minimized. For example, the inventors have observed that an active material layer 102 of 35 nm of thickness performs very well. It is noted that nowadays, the challenge of changing the state of active materials, such as PCM, is not efficiently solved for structures having thickness larger than about 40 nm, for example larger than 50 nm, or larger than 80 nm, or larger than 100 nm. Therefore, minimizing undesired reflections is necessary to guarantee an adequate efficiency since the thickness of the layer of active material cannot, in practice, be made as large as could be desired in terms of noise reduction.

Among the suitable transparent materials to be used both as substrate 103 and prism 101, ITO is especially suitable because it can also act as electrode. When a voltage is applied to one of the two ITO layers, and the other ITO layer is set for example to ground (or a reference voltage), the applied voltage changes the state of the active layer 102. In other words, when the two layers 101, 103 are made of ITO, the external stimulus applied to force the active material (for example, PCM) to undergo a reversible phase change is a suitable voltage applied to the ITO layers, which behave as electrodes. This enables the implementation of the optical switch and also enables a large-scale integration of many optical switches, which facilitates the development towards all-optical processing.

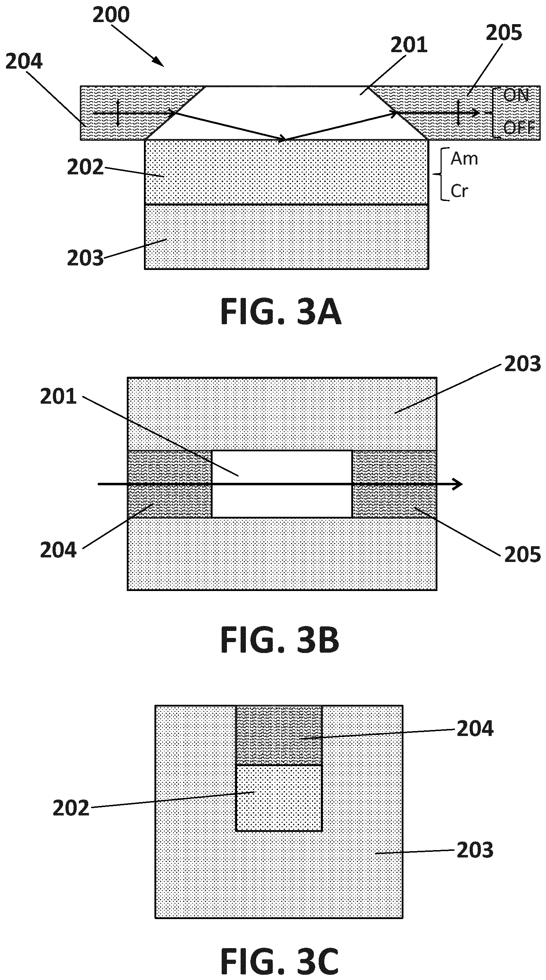

Figures 3A-3C show another configuration of the optical switching device 200 of the present invention. This configuration is particularly suitable for integration with semiconductors technology and production lines and with other optical logic elements and, in general, for industrial production. Figure 3A represents a side view (2D) of the device 200. Figure 3B represents a top view thereof. And Figure 3C represents a front/rear view thereof. In views 3B and 3C it is assumed that the substrate 203 occupies a larger surface than the prism 201 and waveguide 204. In this case, the travelling incident radiation is confined within a waveguide 204 until it arrives at the device. In other words, a waveguide 204 within which the incident radiation travels is coupled to the device 200. For example, the input waveguide 204 is coupled to a first end of the device 200 (in particular, to the input surface of prism 201). Another waveguide 205 -output waveguide- is coupled to the device 200, at an opposite end thereof (to the output surface of prism 201). Output radiation leaves -when no Brewster condition is achieved) the device 200 confined within this second waveguide 205. The waveguides 204, 205 depicted in the flat, side view of Figure 3A are as thick as the prism 201. The thickness of the waveguides 204, 205 could alternatively be different from that of the prism, for example, it could be smaller thereof. The optical switching device 200 differs from the device 100 basically in the way input/output radiation is coupled to/from the device: while in the device 100 incident radiation arrives at the device 100 through the air and output radiation leaves the device 100 also through the air, in the device 200 both input and output radiation are confined in waveguides 204, 205. Waveguides 204, 205 may be made of any conventional material of which typical waveguides are made, such as silicon dioxide (silica, $SiO_2$). Waveguides 204, 205 have, for example, rectangular or square section, although their section may take a different shape.

Like device 100, the optical switching device 200 includes the following elements, stacked one on another: A layer 202 of an active material (such as phase change material (PCM)) is deposited on a substrate layer 203. Like in device 100, the substrate layer 203 can be for example a silicon (Si) substrate. A layer 201 of a second material (coupling medium or prism coupler) is deposited on the active material layer 202, which is made of a material transparent in the wavelength band of interest. The input waveguide 204 is coupled (i.e. physically coupled) to the first end of the layer 201 (that is to say, to the input surface of prism 201), while the output wavelength 205 is coupled (i.e. physically coupled) to the opposite end of the layer 201 (that is to say, to the output surface of prism 201). Layer or prism 201, to which the waveguides 204, 205 are coupled, must be made of a different material from the material of which the waveguides are made, so that the incoming radiation beam is refracted towards the layer 202 of active material and Brewster effect can be produced. The material of which prims 201 is made must be a material transparent in the wavelength band of interest. For example, when the waveguides 204, 205 are made of silicon dioxide, layer 201 can be made of silicon nitride $Si_3N_4$, sapphire or ITO. Apart from the differences listed above, all other device characteristics (possible materials, use of same material for prism and substrate, shapes, layer thicknesses, optical behavior and other properties) are the same as those of device 100. These features are therefore not repeated for the sake of conciseness. Therefore, the description of these features as described for device 100 applies, mutatis mutandis, to device 200.

The configuration of Figures 3A-3C shows how to implement the optical switching device 200 in a real circuit (such as an optical circuit). In this case, linearly polarized radiation with its electric vector vibrating in the plane of incidence travels through the input waveguide 204. At the interface between the waveguide 204 and the coupling layer 201, the incoming radiation is refracted (in a similar way as in device 100). The refracted radiation beam is then reflected at the interface between layers 201 and 202. The operation of the device 200 is the same as the operation of device 100 (Brewster condition, change of state of the active material layer 202 under the control of an external stimulus, etc.). The radiation reflected (when no Brewster condition occurs) is coupled to the output waveguide 205.

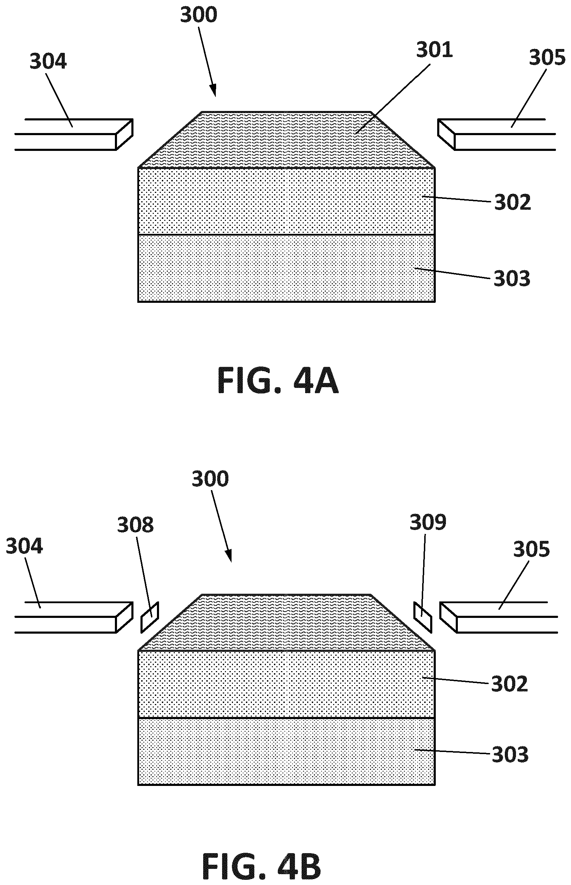

Figures 4A-4B show an alternative embodiment of optical switching device 300 to that of Figures 3A-3C. Like in Figures 3A-3C, the travelling incident radiation is confined within a waveguide 304 until it arrives at the device 300.

However, in this case the waveguide 304 within which the incident radiation travels is not physically (directly) coupled to the device 300. Instead, there is an air gap between the end of waveguide 304 closest to prism 301 and the input surface of prism 301. This way, the interface on which radiation hits and from which it is subsequently refracted is an air-prism interface, like in device 100. The same applies, mutatis mutandis, to output waveguide 305, which is separated from the output surface of prism 301 by means of an air gap. In a more particular embodiment, shown in Figure 4B, there is an optical collimator 308 disposed in the input air gap, that is to say, between the end of waveguide 304 closest to prism 301 and the input surface of prism 301. This guarantees that radiation enters the prism 301 exactly as it enters in device 100. Another optical collimator 309 is disposed in the output air gap, that is to say, between the end of waveguide 305 closest to the prism 301 and the output surface of prism 301, to collimate the radiation entering the waveguide 305.

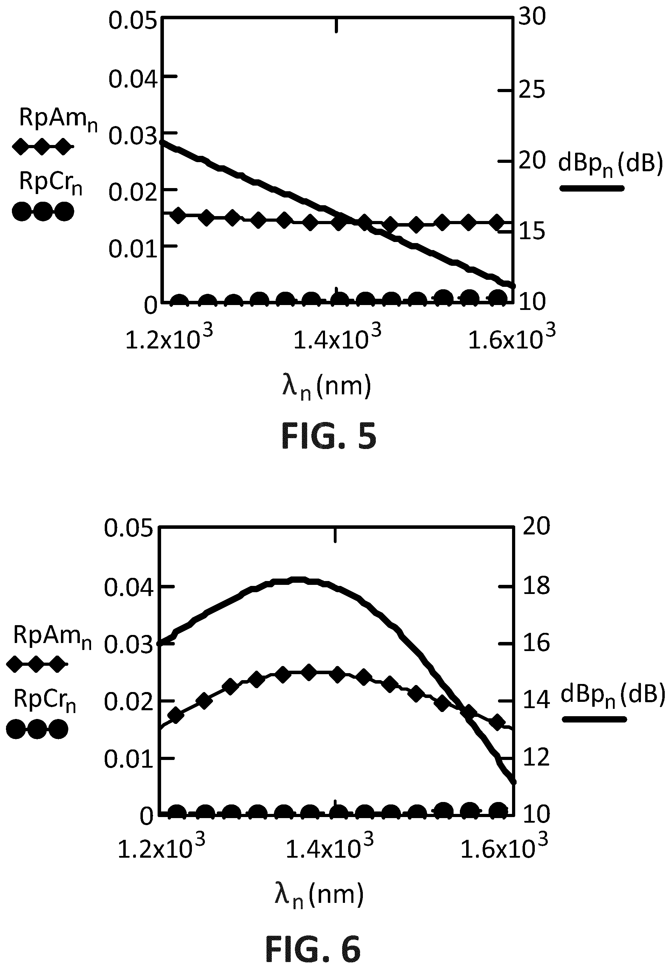

A device 100 as shown in Figures 1A-1C has been designed and simulated in different configurations. The device has been simulated with commercial software MATHCAD 15.0. In a first experiment, the following device has been designed and simulated: On a silicon (Si) substrate 103, a layer 102 of antimony trisulfide ($Sb_2S_3$) has been deposited. The thickness of layer 102 is 76nm. A prism 101 of silicon dioxide ($SiO_2$) has been carved on the antimony trisulfide layer 102. The slope of prism 101 has angle $\alpha = 29°$. When incident radiation (light) as shown in Figure 1A hits the input surface of prism 101, radiation behaves as previously disclosed in both states (amorphous and crystalline) of the antimony trisulfide layer 102. The Brewster condition occurs at Brewster angle $\Theta_B = 66°$. Figure 5 shows two curves of the output reflectivity of the device in a wavelength range of 1200 - 1600 nm (IR range) in the two possible states of the $Sb_2S_3$ layer 102: when the $Sb_2S_3$ layer 102 is in the amorphous state (Am) and when the $Sb_2S_3$ layer 102 is in the crystalline (Cr) state. In a third curve, the reflection contrast between the two phases (states) in dBs is shown. As can be observed, a difference (contrast) of at least about 15 dB can be obtained in the wavelength range of 1200 - 1500 nm.

The same device (same materials for layers 101-103) has been simulated in a second experiment, with the only difference that the thickness of layer 102 is 419nm. The slope of prism 101 also has angle $\alpha = 29°$. The Brewster condition occurs at Brewster angle $\Theta_B = 66°$. In Figure 6, the same curves as in Figure 5 are shown. As can be observed, a difference (contrast) of about 18 dB can be obtained in most of the wavelength range. The improvement in contrast is due to the larger thickness of the PCM layer, which reduces the spurious radiation travelling within the device.

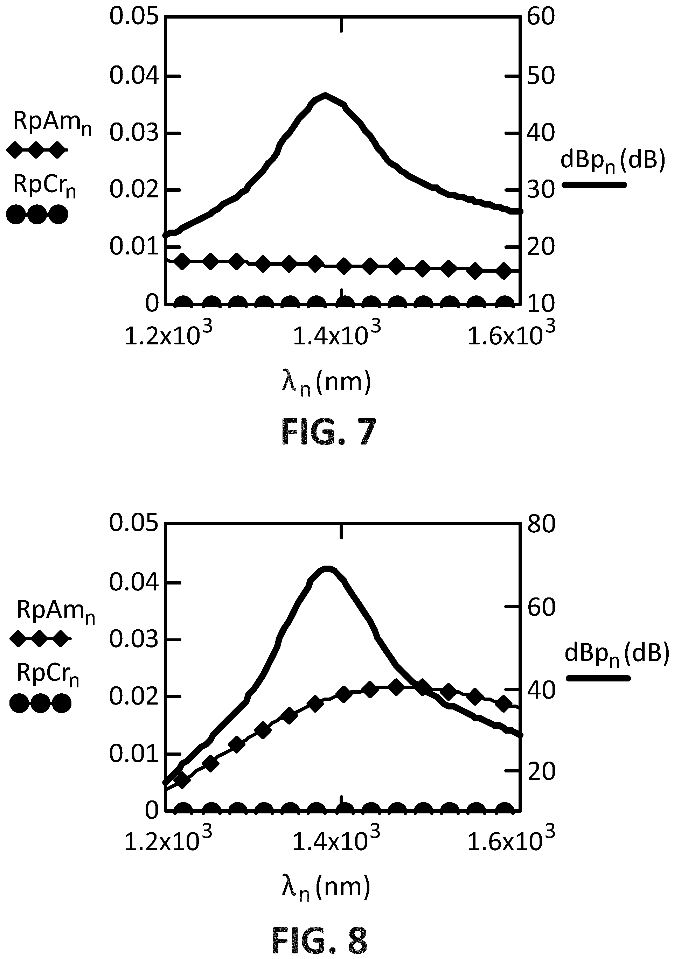

In the third and fourth experiments, a similar device has been simulated, with the difference that a transparent material has been used as substrate 103. In particular, the same transparent material (silicon dioxide, $SiO_2$) has been used for the substrate 103 and prism 101. The active material (layer 102) is antimony trisulfide ($Sb_2S_3$). The slope of prism 101 also has angle $\alpha = 29°$. The Brewster condition occurs at Brewster angle $\Theta_B = 66°$. In the third experiment (Figure 7), the thickness of layer 102 is 56nm. Despite this narrow layer 102 of active material, a difference (contrast) of above 20 dB can be obtained in the whole wavelength range. In fact, a contrast of above 30 dB is obtained in most of the wavelength range. This contrast is above 40 dB in a portion of the wavelength range. In the fourth experiment (Figure 8) the same device as the one in the third experiment was simulated, with the only difference that the thickness of layer 102 is 456nm. A difference (contrast) of above 30 dB can be obtained in almost the whole wavelength range. This contrast is above 40 dB in a large portion of wavelength range, and is even above 60 dB in a small portion of the wavelength range. The excellent performance of the device of experiments 3 and 4 is due to the fact that the same transparent material is used to build the substrate and prism.

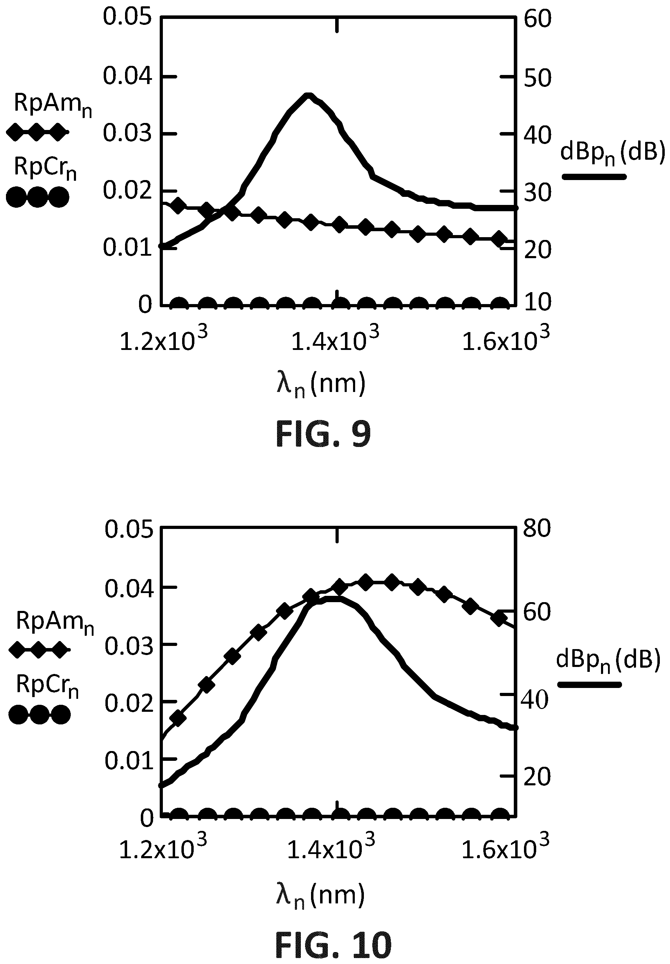

In the fifth and sixth experiments, a device 100 has been simulated, in which, like in the third and fourth experiments, the same transparent material (silicon dioxide, $SiO_2$) has been used as substrate 103 and prism 101. In this case, a different active material (layer 102) has been used: $Sb_2Se_3$. The slope of prism 101 has angle $\alpha = 38°$. The Brewster condition occurs at Brewster angle $\Theta_B = 71°$. In the fifth experiment (Figure 9), the thickness of layer 102 is 46nm. Despite this narrow layer 102 of active material, a difference (contrast) of above 20 dB can be obtained in the whole wavelength range. In fact, a contrast of almost 30 dB is obtained in most of the wavelength range. This contrast is above 40 dB in a portion of the wavelength range. In the sixth experiment (Figure 10) the same device as the one in the fifth experiment was simulated, with the only difference that the thickness of layer 102 is 361nm. A difference (contrast) of above 30 dB can be obtained in almost the whole wavelength range. This contrast reaches 60 dB in a small portion of the wavelength range. The excellent performance of the device of experiments 5 and 6 is due to the fact that the same transparent material is used to build the substrate and prism.

While prior attempts to achieve optical switches, such as in US2020/0379276A1, have reported switching activity (contrast between ON and OFF modes) in a very narrow wavelength window, in the present case, as can be seen, the switching ratio of the optical switching device is very high (minimum of 15 dB, but usually above 30 dB and even 40dB) in the range of 1000 - 1600 nm, which proves that the device can optimally perform as a switch in many applications. This implies a large step in the development of challenging technologies, like the optical computer.

The optical switching device of the present invention operates under reflection properties of light. One of the advantages of this characteristic is that an optimal response in a broad wavelength range is obtained, because with a large collection of phase change materials the reflectivity response (Brewster phenomena) of the device performs with optimal contrast (ON/OFF switching) in a large wavelength range.

Another advantage of operation under reflection properties of radiation (i.e. light) is that it enables the optical integration of the device with other optical and electrical equipment, because the set-up to operate under reflection conditions implies that radiation travels in a plane parallel to the substrate (as shown for example in devices 100, 200, 300). Therefore, the optical set-up enables integration as it does not cause the volume of the substrate (PCB or the like) to increase. Therefore, large-scale manufacturing of devices including the optical switching device is enabled.

Compared with the related art, the above technical solutions conceived by this invention can achieve the following advantageous effects:

(1) The modulation range (range between "ON" and "OFF" at the output of the optical switch) can be generated in both the VIS and IR ranges, thereby realizing optical switching. The all-optical switch of the invention has the characteristics of high contrast obtained through the application of the Brewster angle condition. The all-optical switch has a simple layer stack structure and therefore production costs can be reduced.

(2) The optical switch can be coupled to a waveguide to use it in an integrated optical circuit. Advantages of using an optical integrated circuit include higher maximum data speed that can be sent over an optical link as compared to other means and absence of damage due to natural and man-made interference and transient energies.

In this text, the term "comprises" and its derivations -such as "comprising", etc.- should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An optical switching device (100, 200, 300), comprising:

a substrate (103, 203, 303);
a layer (102, 202, 302) of an active material disposed on the substrate (103, 203, 303), the active material being either a phase change material or a material which, by changing its stoichiometry, its optical properties change, wherein the active material is configured to change upon application of an external stimulus between a crystalline phase having a first refractive index and an amorphous phase having a second refractive index, the first refractive index being different from the second refractive index;

the optical switching device (100, 200, 300) being **characterized in that** it comprises:

a layer (101, 201, 301) of a transparent material disposed on the layer (102, 202, 302) of active material, wherein the layer of a transparent material is a prism (101, 201, 301) defining an angle $\alpha$ between the base of the prism (101, 201, 301) and a first side thereof acting as entrance face for an incident radiation beam, and between the base (101, 201, 301) of the prism and a second side thereof acting as output face for the radiation beam leaving the optical switching device; wherein the angle $\alpha$ defined by the prism (101, 201, 301) is calculated by solving the following equations:

$$\theta_t = \theta_B - \alpha$$

$$\theta_i = 90 - \alpha$$

wherein $\theta_i$ is the angle of incidence between the incident direction of radiation and the normal to the entrance surface of the prism (101, 201, 301); $\theta_t$ is the angle of the wave transmitted within the prism (101, 201, 301); $\theta_3$ is the Brewster angle, fulfilling $\theta_B = atan\left(\frac{n_{PCM}}{n_{prism}}\right)$ wherein $n_{prism}$ is the refractive index of the material of the prism (101, 201, 301) and $n_{PCM}$ represents the refractive index of the active material (102, 202, 302) and $n_{air} \cdot \sin\theta_i = n_{prism} \cdot \sin\theta_t$, wherein $n_{air} = 1$;
such that, in use of the optical switching device (100, 200, 300), when a linearly polarized plane radiation wave reaches an entrance face of the prism (101, 201, 301) parallel to the substrate (103, 203, 303) and radiation is refracted and travels within the prism (101, 201, 301) until it reaches the surface of the layer (102, 202, 302) of active material, the Brewster condition is met for one of the two phases, crystalline phase or amorphous phase, of the active material of which the layer (102, 202, 302) is made, so that when the active material is in the phase for which the Brewster condition is met, radiation is not reflected at the interface between the prism (101, 201, 301) and the layer (102, 202, 302) of active material, while when the active material is in the phase for which the Brewster condition is not met, radiation is reflected at the interface between the prism (101, 201, 301) and the layer (102, 202, 302) of active material and leaves the optical switching device (100, 200, 300) when it reaches an output face of the prism (101, 201, 301), thus controlling the switching mode of the optical switching device (100, 200, 300) through the presence or absence of reflected light at said interface.

2. The optical switching device (100, 200, 300) of claim 1, wherein the thickness of the layer (102, 202, 302) of an active material is between 30 and 2000 nm.

3. The optical switching device (100, 200, 300) of either claim 1 or 2, wherein the layer (102, 202, 302) of active material is made of a phase change material, the phase change material being a chalcogenide phase-change material.

4. The optical switching device (100, 200, 300) of claim 3, wherein the chalcogenide phase-change material is selected from the following: GeTe, GaSe, SbTe, GeSe, GaTe, GaS, $Sb_2S_3$, $Sb_2Se_3$, $Ga_2S_3$ and GST.

5. The optical switching device (100, 200, 300) of any one of claims 1-4, wherein the substrate (103, 203, 303) is made of the same transparent material as the material of which the prism (101, 201, 301) is made.

6. The optical switching device (100, 200, 300) of claim 5, wherein the substrate (103, 203, 303) and the prism (101, 201, 301) are made of ITO.

7. The optical switching device (100, 200, 300) of any one of claims 1-6, wherein the linearly polarized plane wave travels in the air until it reaches an entrance face of the prism (101, 201, 301), or the linearly polarized plane wave travels through a waveguide (204) until it reaches an entrance face of the prism (101, 201, 301).

8. The optical switching device (100, 200, 300) of any one of claims 1-6, wherein when the active material is in the phase for which the Brewster condition is not met, radiation leaves the optical switching device (100, 200, 300) through the air when it reaches an output face of the prism (101, 201, 301).

9. The optical switching device (100, 200, 300) of any one of claims 1-6, wherein when the active material is in the phase for which the Brewster condition is not met, radiation leaves the optical switching device (100, 200, 300) through a waveguide (205) when it reaches an output face of the prism (101, 201, 301).

10. The optical switching device (100, 200, 300) of any one of claims 1-9, which operates in the infrared and/or the visible spectrum of light.

11. A system comprising:

   an optical switching device (100, 200, 300) according to any one of claims 1-9; and
   means for generating a stimulus configured to control the state or phase of the active material of optical switching device (100, 200, 300).

12. The system of claim 11 when it comprises an optical switching device according to any one of claims 1-6, further comprising:

   a first waveguide (204) configured to carry the linearly polarized plane wave until it reaches an entrance face of the prism (101, 201, 301); and
   a second waveguide (205) configured to carry the output radiation when it reaches an output face of the prism (101, 201, 301).

13. The system of claim 12, further comprising a first air gap between the end of the first waveguide (204) and a second air gap between the end of the second waveguide (205).

14. The system of claim 13, further comprising means for collimating the radiation outputted by the first waveguide (204), so that a collimated radiation beam reaches the entrance face of the prism (101, 201, 301).

15. A method of operating an optical switching device (100, 200, 300) between an ON mode and an OFF mode, wherein the optical switching device (100, 200, 300) comprises a substrate (103, 203, 303), a layer (102, 202, 302) of an active material disposed on the substrate (103, 203, 303), wherein the active material is configured to change upon application of an external stimulus between a crystalline phase having a first refractive index and an amorphous phase having a second refractive index, the first refractive index being different from the second refractive index; and a layer (101, 201, 301) of a transparent material disposed on the layer (102, 202, 302) of active material, wherein the layer of a transparent material is a prism (101, 201, 301) defining an angle $\alpha$ between the base of the prism and a first side thereof acting as entrance face for an incident radiation beam and between the base of the prism and a second side thereof acting as output face for the radiation beam leaving the optical switching device, **characterized in that**

the angle $\alpha$ is calculated by solving the following equations:

$$\theta_t = \theta_B - \alpha$$

$$\theta_i = 90 - \alpha$$

wherein $\theta_i$ is the angle of incidence between the incident direction of radiation and the normal to the entrance surface of the prism (101, 201, 301); $\theta_t$ is the angle of the wave transmitted within the prism (101, 201, 301); $\theta_B$ is the Brewster angle, fulfilling $\theta_B = atan\left(\frac{n_{PCM}}{n_{prism}}\right)$ wherein $n_{prism}$ is the refractive index of the material of the prism (101, 201, 301) and $n_{PCM}$ represents the refractive index of the active material (102, 202, 302) and

$$n_{air} \cdot \sin\theta_i = n_{prism} \cdot \sin\theta_t,$$

wherein $n_{air} = 1$;
the method comprising:

controlling, using a stimulus source, the state or phase of the active material between a crystalline phase having a first refractive index and an amorphous phase having a second refractive index, the first refractive index being different from the second refractive index,
providing a linearly polarized plane radiation wave to incide on the entrance face of the prism (101, 201, 301) parallel to the substrate (103, 203, 303), so that radiation is refracted and travels within the prism (101, 201, 301) until it reaches the surface of the layer (102, 202, 302) of active material, and
when the phase change material is in a phase, crystalline or amorphous, for which the Brewster condition is met, radiation is not reflected at the interface between the prism (101, 201, 301) and the layer (102, 202, 302) of active material, and the optical switching device (100, 200, 300) is in OFF mode, while when the active material is in a phase, amorphous or crystalline, for which the Brewster condition is not met, radiation is reflected at the interface between the prism (101, 201, 301) and the layer (102, 202, 302) of active material and leaves the optical switching device (100, 200, 300) when it reaches an output face of the prism (101, 201, 301), and the optical switching device (100, 200, 300) is in ON mode.


**Patentansprüche**

1. Eine optische Schaltvorrichtung (100, 200, 300), umfassend:

ein Substrat (103, 203, 303);
eine Schicht (102, 202, 302) eines aktiven Materials, die auf dem Substrat (103, 203, 303) angeordnet ist, wobei das aktive Material entweder ein Phasenwechselmaterial oder ein Material ist, dessen optische Eigenschaften sich durch Änderung seiner Stöchiometrie ändern, wobei das aktive Material so konfiguriert ist, dass es sich bei Anlegen eines externen Stimulus zwischen einer kristallinen Phase mit einem ersten Brechungsindex und einer amorphen Phase mit einem zweiten Brechungsindex ändert, wobei sich der erste Brechungsindex vom zweiten Brechungsindex unterscheidet;

die optische Schaltvorrichtung (100, 200, 300) ist **dadurch gekennzeichnet ist, dass** sie umfasst:

eine Schicht (101, 201, 301) eines transparenten Materials, die auf der Schicht (102, 202, 302) aus aktivem Material angeordnet ist, wobei die Schicht aus einem transparenten Material ein Prisma (101, 201, 301) ist, das einen Winkel $\alpha$ zwischen der Basis des Prismas (101, 201, 301) und einer ersten Seite davon, die als Eintrittsfläche für einen einfallenden Strahl dient, und zwischen der Basis (101, 201, 301)des Prismas und einer zweiten Seite davon, die als Austrittsfläche für den Strahl dient, der die optische Schaltvorrichtung verlässt, definiert; wobei der durch das Prisma (101, 201, 301) definierte Winkel $\alpha$ durch Lösen der folgenden Gleichung berechnet wird:

$$\theta_t = \theta_B - \alpha$$

$$\theta_i = 90 - \alpha$$

wobei $\theta_i$ der Einfallswinkel zwischen der Einfallsrichtung der Strahlung und der normalen Eintrittsfläche des Prismas (101, 201, 301) ist; $\theta_t$ der Winkel der innerhalb des Prismas (101, 201, 301) übertragenen Welle ist; $\theta_B$ der Brewster-Winkel ist, der $\theta_B = atan\left(\frac{nPCM}{nprism}\right)$ erfüllt, wobei $n_{prism}$ der Brechungsindex des Materials des Prismas (101, 201, 301) ist und $n_{PCM}$ den Brechungsindex des aktiven Materials (102, 202, 302) darstellt und

$$n_{air} \cdot \sin\theta_i = n_{prism} \cdot \sin\theta_t, \text{ wobei } n_{air} = 1 ;$$

sodass bei Verwendung der optischen Schaltvorrichtung (100, 200, 300), wenn eine linear polarisierte ebene Strahlungswelle auf die Eintrittsfläche des Prismas (101, 201, 301) parallel zum Substrat (103, 203, 3030) trifft und Strahlung gebrochen wird und sich innerhalb des Prismas (101, 201, 301) ausbreitet bis sie die Oberfläche der Schicht (102, 202, 302) aus aktivem Material erreicht, die Brewster-Bedingung erfüllt ist für einer der zwei Phasen, kristalline oder amorphe Phase, des aktiven Materials aus dem die Schicht (102, 202, 302) gemacht ist, sodass wenn sich das aktive Material in der Phase befindet, für die die Brewster-Bedingung erfüllt ist, Strahlung an der Grenzfläche zwischen dem Prisma (101, 201, 301) und der Schicht (102, 202, 302) des aktiven Materials nicht reflektiert wird, während, wenn sich das aktive Material in der Phase befindet, für die die Brewster-Bedingung nicht erfüllt ist, Strahlung an der Grenzfläche zwischen dem Prisma (101, 201, 301) und der Schicht (102, 202, 302) des aktiven Materials reflektiert wird und die optische Schaltvorrichtung (100, 200, 300) verlässt, wenn sie eine Austrittsfläche des Prismas (101, 201, 301) erreicht, wodurch der Schaltmodus der optischen Schaltvorrichtung (100, 200, 300) durch das Vorhandensein oder Fehlen von reflektiertem Licht an der genannten Grenzfläche gesteuert wird.

2. Die optische Schaltvorrichtung (100, 200, 300) nach Anspruch 1, wobei die Dicke der Schicht (102, 202, 302) eines aktiven Materials zwischen 30 und 2000 nm liegt.

3. Die optische Schaltvorrichtung (100, 200, 300) nach Anspruch 1 oder 2, wobei die Schicht (102, 202, 302) des aktiven Materials aus einem Phasenwechselmaterial besteht, wobei es sich bei dem Phasenwechselmaterial um ein Chalkogenid-Phasenwechselmaterial handelt.

4. Die optische Schaltvorrichtung (100, 200, 300) nach Anspruch 3, wobei das Chalkogenid-Phasenwechselmaterial ausgewählt ist aus den folgenden: GeTe, GaSe, SbTe, GeSe, GaTe, GaS, $Sb_2S_3$, $Sb_2Se_3$, $Ga_2S_3$ und GST.

5. Die optische Schaltvorrichtung (100, 200, 300) nach einem der Ansprüche 1-4, wobei das Substrat (103, 203, 303) aus dem gleichen transparenten Material besteht wie das Material aus dem das Prisma (101, 201, 301) besteht.

6. Die optische Schaltvorrichtung (100, 200, 300) nach Anspruch 5, wobei das Substrat (103, 203, 303) und das Prisma (101, 201, 301) aus ITO bestehen.

7. Die optische Schaltvorrichtung (100, 200, 300) nach einem der Ansprüche 1-6, wobei sich die linear polarisierte ebene Welle in der Luft ausbreitet, bis sie auf eine Eintrittsfläche des Prismas (101, 201, 301) trifft, oder sich die linear polarisierte ebene Welle durch einen Wellenleiter (204) ausbreitet, bis sie auf eine Eintrittsfläche des Prismas (101, 201, 301) trifft.

8. Die optische Schaltvorrichtung (100, 200, 300) nach einem der Ansprüche 1-6, wobei, wenn sich das aktive Material in der Phase befindet, für die die Brewster-Bedingung nicht erfüllt ist, die Strahlung die optische Schaltvorrichtung (100, 200, 300) durch die Luft verlässt, wenn sie auf eine Austrittsfläche des Prismas (101, 201, 301) trifft.

9. Die optische Schaltvorrichtung (100, 200, 300) nach einem der Ansprüche 1-6, wobei, wenn sich das aktive Material in der Phase befindet, für die die Brewster-Bedingung nicht erfüllt ist, die Strahlung die optische Schaltvorrichtung (100, 200, 300) über einen Wellenleiter (205) verlässt, wenn sie auf eine Austrittsfläche des Prismas (101, 201, 301) trifft.

10. Die optische Schaltvorrichtung (100, 200, 300) nach einem der Ansprüche 1-9, die im Infrarot- und/oder im sichtbaren Lichtspektrum arbeitet.

11. Ein System umfassend:

eine optische Schaltvorrichtung (100, 200, 300) nach einem der Ansprüche 1-9; und
Mittel zur Erzeugung eines Stimulus, der so konfiguriert ist, dass er den Zustand oder die Phase des aktiven Materials einer optischen Schaltvorrichtung steuert (100, 200, 300).

12. Das System nach Anspruch 11, wenn es eine optische Schaltvorrichtung gemäß einem der Ansprüche 1-6 umfasst, ferner umfassend:

einen ersten Wellenleiter (204), der so konfiguriert ist, dass er die linear polarisierte ebene Welle leitet bis sie die Eintrittsfläche des Prismas (101, 201, 301) erreicht; und
einen zweiten Wellenleiter (205), der so konfiguriert ist, dass er die Ausgangsstrahlung leitet, wenn sie eine Austrittsfläche des Prismas (101, 201, 301) erreicht.

13. Das System nach Anspruch 12, ferner umfassend einen ersten Luftspalt zwischen dem Ende des ersten Wellenleiters (204) und einen zweiten Luftspalt zwischen dem Ende des zweiten Wellenleiters (205).

14. Das System nach Anspruch 13, ferner umfassend Mittel zum Kollimieren der vom ersten Wellenleiter (204) abgegebenen Strahlung, sodass ein kollimierter Strahlungsstrahl die Eintrittsfläche des Prismas (101, 201, 301) erreicht.

15. Verfahren zum Betreiben einer optischen Schaltvorrichtung (100, 200, 300) zwischen einem EIN- und einem AUS-Zustand, wobei die optische Schaltvorrichtung (100, 200, 300) ein Substrat (103, 203, 303), eine auf dem Substrat (103, 203, 303) angeordnete Schicht (102, 202, 302) eines aktiven Materials, wobei das aktive Material so konfiguriert ist, dass es sich bei Anlegen eines externen Stimulus zwischen einer kristallinen Phase mit einem ersten Brechungsindex und einer amorphen Phase mit einem zweiten Brechungsindex ändert, wobei sich der erste Brechungsindex vom zweiten Brechungsindex unterscheidet; und eine auf der Schicht (102, 202, 302) des aktiven Materials angeordnete Schicht (101, 201, 301) eines transparenten Materials umfasst, wobei die Schicht aus transparentem Material ein Prisma (101, 201, 301) ist, das einen Winkel $\alpha$ zwischen der Basis des Prismas (101, 201, 301) und einer ersten Seite davon, die als Eintrittsfläche für einen einfallenden Strahl dient, und zwischen der Basis (101, 201, 301) des Prismas und einer zweiten Seite davon, die als Austrittsfläche für den Strahl dient, der die optische Schaltvorrichtung verlässt, definiert,
**dadurch gekennzeichnet, dass**

der durch das Prisma (101, 201, 301) definierte Winkel $\alpha$ durch Lösen der folgenden Gleichung berechnet wird:

$$\theta_t = \theta_B - \alpha$$

$$\theta_i = 90 - \alpha$$

wobei $\theta_i$ der Einfallswinkel zwischen der Einfallsrichtung der Strahlung und der normalen Eintrittsfläche des Prismas (101, 201, 301) ist; $\theta_t$ der Winkel der innerhalb des Prismas (101, 201, 301) übertragenen Welle ist; $\theta_B$ der Brewster-Winkel ist, der $\theta_B = atan\left(\frac{nPCM}{nprism}\right)$ erfüllt, wobei $n_{prism}$ der Brechungsindex des Materials des Prismas $n_{prism}$ (101, 201, 301) ist und $n_{PCM}$ den Brechungsindex des aktiven Materials (102, 202, 302) darstellt und

$$n_{air} \cdot \sin\theta_i = n_{prism} \cdot \sin\theta_t, \text{ wobei } n_{air} = 1 \; ;$$

das Verfahren umfasst:

Steuern, unter Verwendung einer Stimulusquelle, des Zustands oder der Phase des aktiven Materials zwischen einer kristallinen Phase mit einem ersten Brechungsindex und einer amorphen Phase mit einem zweiten Brechungsindex, wobei sich der erste Brechungsindex vom zweiten Brechungsindex unterscheidet, Bereitstellen einer linear polarisierten ebenen Strahlungswelle, die auf die Eintrittsfläche des Prismas (101, 201, 301) parallel zum Substrat (103, 203, 303) trifft, sodass die Strahlung gebrochen wird und sich innerhalb des Prismas (101, 201, 301) ausbreitet, bis sie die Oberfläche der Schicht (102, 202, 302) aus aktivem Material erreicht, und

wenn sich das Phasenwechselmaterial in einer Phase befindet, kristallin oder amorph, für die die Brewster-Bedingung erfüllt ist, wird die Strahlung an der Grenzfläche zwischen dem Prisma (101, 201, 301) und der Schicht (102, 202, 302) des aktiven Materials nicht reflektiert, und die optische Schaltvorrichtung (100, 200, 300) befindet sich im AUS-Zustand, während wenn sich das aktive Material in einer Phase befindet, amorph oder kristallin, für die die Brewster-Bedingung nicht erfüllt ist, wird die Strahlung an der Grenzfläche zwischen dem Prisma (101, 201, 301) und der Schicht (102, 202, 302) des aktiven Materials reflektiert und verlässt die optische Schaltvorrichtung (100, 200, 300), wenn sie auf eine Austrittsfläche des Prismas (101, 201, 301) trifft und die optische Schaltvorrichtung (100, 200, 300) befindet sich im EIN-Zustand.

## Revendications

1. Dispositif de commutation optique (100, 200, 300), comprenant :

un substrat (103, 203, 303) ;
une couche (102, 202, 302) d'un matériau actif disposée sur le substrat (103, 203, 303), le matériau actif étant soit un matériau à changement de phase soit un matériau dont les propriétés optiques changent par modification de sa stœchiométrie, le matériau actif étant configuré pour changer, lors de l'application d'un stimulus externe, entre une phase cristalline ayant un premier indice de réfraction et une phase amorphe ayant un second indice de réfraction, le premier indice de réfraction étant différent du second indice de réfraction ;

le dispositif de commutation optique (100, 200, 300) étant **caractérisé en ce qu'il** comprend :

une couche (101, 201, 301) d'un matériau transparent disposée sur la couche (102, 202, 302) de matériau actif, la couche d'un matériau transparent étant un prisme (101, 201, 301) définissant un angle $\alpha$ entre la base du prisme (101, 201, 301) et un premier côté de celui-ci agissant comme face d'entrée pour un faisceau de rayonnement incident, et entre la base (101, 201, 301) du prisme et un second côté de celui-ci agissant comme face de sortie pour le faisceau de rayonnement quittant le dispositif de commutation optique ; l'angle $\alpha$ défini par le prisme (101, 201, 301) étant calculé en résolvant les équations suivantes :

$$\theta_t = \theta_B - \alpha$$

$$\theta_i = 90 - \alpha$$

où Oi est l'angle d'incidence entre la direction d'incidence du rayonnement et la normale à la surface d'entrée du prisme (101, 201, 301) ; $\theta_t$ est l'angle de l'onde transmise à l'intérieur du prisme (101, 201, 301) ; $\theta_B$ est l'angle de

Brewster, satisfaisant $\theta_B = atan\left(\dfrac{n_{PCM}}{n_{prism}}\right)$, où $n_{prism}$ est l'indice de réfraction du matériau du prisme (101, 201, 301) et $n_{PCM}$ représente l'indice de réfraction du matériau actif (102, 202, 302) et

$$n_{air} \cdot \sin \theta_i = n_{prism} \cdot \sin \theta_t$$, où $n_{air} = 1$ ;

de telle sorte que, lors de l'utilisation du dispositif de commutation optique (100, 200, 300), lorsqu'une onde de rayonnement plane polarisée linéairement atteint une face d'entrée du prisme (101, 201, 301) parallèlement au substrat (103, 203, 303) et que le rayonnement est réfracté et se propage à l'intérieur du prisme (101, 201, 301) jusqu'à atteindre la surface de la couche (102, 202, 302) de matériau actif, la condition de Brewster est satisfaite pour l'une des deux phases, phase cristalline ou phase amorphe, du matériau actif dont la couche (102, 202, 302) est constituée, de sorte que lorsque le matériau actif est dans la phase pour laquelle la condition de Brewster est satisfaite, le rayonnement n'est pas réfléchi à l'interface entre le prisme (101, 201, 301) et la couche (102, 202, 302) de matériau actif, tandis que lorsque le matériau actif est dans la phase pour laquelle la condition de Brewster n'est pas satisfaite, le rayonnement est réfléchi à l'interface entre le prisme (101, 201, 301) et la couche (102, 202, 302) de matériau actif et quitte le dispositif de commutation optique (100, 200, 300) lorsqu'il atteint une face de sortie du prisme (101, 201, 301), contrôlant ainsi le mode de commutation du dispositif de commutation optique (100, 200, 300) par la présence ou l'absence de lumière réfléchie à ladite interface.

2. Dispositif de commutation optique (100, 200, 300) selon la revendication 1, dans lequel l'épaisseur de la couche (102, 202, 302) d'un matériau actif est comprise entre 30 et 2 000 nm.

3. Dispositif de commutation optique (100, 200, 300) selon l'une des revendications 1 ou 2, dans lequel la couche (102, 202, 302) de matériau actif est constituée d'un matériau à changement de phase, le matériau à changement de phase étant un matériau à changement de phase chalcogénure.

4. Dispositif de commutation optique (100, 200, 300) selon la revendication 3, dans lequel le matériau à changement de phase chalcogénure est sélectionné parmi les matériaux suivants : GeTe, GaSe, SbTe, GeSe, GaTe, GaS, $Sb_2S_3$, $Sb_2Se_3$, $Ga_2S_3$ et GST.

5. Dispositif de commutation optique (100, 200, 300) selon l'une quelconque des revendications 1 à 4, dans lequel le substrat (103, 203, 303) est constitué du même matériau transparent que le matériau dont le prisme (101, 201, 301) est constitué.

6. Dispositif de commutation optique (100, 200, 300) selon la revendication 5, dans lequel le substrat (103, 203, 303) et le prisme (101, 201, 301) sont constitués d'ITO.

7. Dispositif de commutation optique (100, 200, 300) selon l'une quelconque des revendications 1 à 6, dans lequel l'onde plane polarisée linéairement se propage dans l'air jusqu'à atteindre une face d'entrée du prisme (101, 201, 301), ou l'onde plane polarisée linéairement se propage à travers un guide d'ondes (204) jusqu'à atteindre une face d'entrée du prisme (101, 201, 301).

8. Dispositif de commutation optique (100, 200, 300) selon l'une quelconque des revendications 1 à 6, dans lequel, lorsque le matériau actif est dans la phase pour laquelle la condition de Brewster n'est pas satisfaite, le rayonnement quitte le dispositif de commutation optique (100, 200, 300) à travers l'air lorsqu'il atteint une face de sortie du prisme (101, 201, 301).

9. Dispositif de commutation optique (100, 200, 300) selon l'une quelconque des revendications 1 à 6, dans lequel, lorsque le matériau actif est dans la phase pour laquelle la condition de Brewster n'est pas satisfaite, le rayonnement quitte le dispositif de commutation optique (100, 200, 300) à travers un guide d'ondes (205) lorsqu'il atteint une face de sortie du prisme (101, 201, 301).

10. Dispositif de commutation optique (100, 200, 300) selon l'une quelconque des revendications 1 à 9, qui fonctionne dans l'infrarouge et/ou le spectre visible de la lumière.

11. Système comprenant :

un dispositif de commutation optique (100, 200, 300) selon l'une quelconque des revendications 1 à 9 ; et
des moyens pour générer un stimulus configurés pour contrôler l'état ou la phase du matériau actif du dispositif de commutation optique (100, 200, 300).

12. Système selon la revendication 11 lorsqu'il comprend un dispositif de commutation optique selon l'une quelconque des revendications 1 à 6, comprenant en outre :

un premier guide d'ondes (204) configuré pour acheminer l'onde plane polarisée linéairement jusqu'à atteindre une face d'entrée du prisme (101, 201, 301) ; et
un second guide d'ondes (205) configuré pour acheminer le rayonnement de sortie lorsqu'il atteint une face de sortie du prisme (101, 201, 301).

13. Système selon la revendication 12, comprenant en outre une première lame d'air entre l'extrémité du premier guide d'ondes (204), et une seconde lame d'air entre l'extrémité du second guide d'ondes (205).

14. Système selon la revendication 13, comprenant en outre des moyens pour collimater le rayonnement émis par le premier guide d'ondes (204), de sorte qu'un faisceau de rayonnement collimaté atteint la face d'entrée du prisme (101, 201, 301).

15. Procédé de fonctionnement d'un dispositif de commutation optique (100, 200, 300) entre un mode ON et un mode OFF, dans lequel le dispositif de commutation optique (100, 200, 300) comprend un substrat (103, 203, 303), une couche (102, 202, 302) d'un matériau actif disposée sur le substrat (103, 203, 303), le matériau actif étant configuré pour changer, lors de l'application d'un stimulus externe, entre une phase cristalline ayant un premier indice de réfraction et une phase amorphe ayant un second indice de réfraction, le premier indice de réfraction étant différent du second indice de réfraction ; et une couche (101, 201, 301) d'un matériau transparent disposée sur la couche (102, 202, 302) de matériau actif, la couche d'un matériau transparent étant un prisme (101, 201, 301) définissant un angle $\alpha$ entre la base du prisme et un premier côté de celui-ci agissant comme face d'entrée pour un faisceau de rayonnement incident, et entre la base du prisme et un second côté de celui-ci agissant comme face de sortie pour le faisceau de rayonnement quittant le dispositif de commutation optique, **caractérisé en ce que** l'angle $\alpha$ est calculé en résolvant les équations suivantes :

$$\theta_t = \theta_B - \alpha$$

$$\theta_i = 90 - \alpha$$

où Oi est l'angle d'incidence entre la direction d'incidence du rayonnement et la normale à la surface d'entrée du prisme (101, 201, 301) ; $\theta_t$ est l'angle de l'onde transmise à l'intérieur du prisme (101, 201, 301) ; $\theta B$ est l'angle de

Brewster, satisfaisant $\theta_B = atan\left(\frac{n_{PCM}}{n_{prism}}\right)$ où $n_{prism}$ est l'indice de réfraction du matériau du prisme (101, 201, 301) et $n_{PCM}$ représente l'indice de réfraction du matériau actif (102, 202, 302) et

$$n_{air} \cdot \sin\theta_i = n_{prism} \cdot \sin\theta_t \quad \text{où } n_{air} = 1 ;$$

le procédé comprenant :

le contrôle, à l'aide d'une source de stimulus, de l'état ou de la phase du matériau actif entre une phase cristalline ayant un premier indice de réfraction et une phase amorphe ayant un second indice de réfraction, le premier indice de réfraction étant différent du second indice de réfraction,
la fourniture d'une onde de rayonnement plane polarisée linéairement pour qu'elle tombe sur la face d'entrée du prisme (101, 201, 301) parallèlement au substrat (103, 203, 303), de sorte que le rayonnement est réfracté et se propage à l'intérieur du prisme (101, 201, 301) jusqu'à atteindre la surface de la couche (102, 202, 302) de matériau actif, et
lorsque le matériau à changement de phase est dans une phase, cristalline ou amorphe, pour laquelle la condition de Brewster est satisfaite, le rayonnement n'est pas réfléchi à l'interface entre le prisme (101, 201, 301) et la couche (102, 202, 302) de matériau actif, et le dispositif de commutation optique (100, 200, 300) est en mode OFF, tandis que lorsque le matériau actif est dans une phase, amorphe ou cristalline, pour laquelle la condition de Brewster n'est pas satisfaite, le rayonnement est réfléchi à l'interface entre le prisme (101, 201, 301) et la couche (102, 202, 302) de matériau actif et quitte le dispositif de commutation optique (100, 200, 300) lorsqu'il atteint une face de sortie du prisme (101, 201, 301), et le dispositif de commutation optique (100, 200, 300) est en mode ON.

**FIG. 1A**

**FIG. 1B**

**FIG. 1C**

FIG. 2

FIG. 3A

FIG. 3B

FIG. 3C

304    300    301    305

302

303

# FIG. 4A

300

304    308    309    305

302

303

# FIG. 4B

**FIG. 5**

**FIG. 6**

**FIG. 7**

**FIG. 8**

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110075239 A1
- US 20200379276 A1

- US 20080285912 A1

**Non-patent literature cited in the description**

- **DELANEY, M** ; **ZEIMPEKIS, I.** ; **LAWSON, D.** ; **HEWAK, D. W.** ; **MUSKENS, O. L**. A new family of ultralow loss reversible phase-change materials for photonic integrated circuits: Sb2S3 and Sb2Se3. *Advanced functional materials,*, 2020, vol. 30 (36), 2002447